# EUROPÄISCHE PATENTSCHRIFT

(11) **EP 1 420 191 B1**
(45) Veröffentlichungstag und Bekanntmachung des Hinweises auf die Patenterteilung: **03.04.2013**
(21) Anmeldenummer: 03020849.0
(22) Anmeldetag: 13.09.2003
(51) Int. Cl.: F16H 7/12

(54) **Spannvorrichtung für einen Zugmitteltrieb**
Tensioner device for a traction drive
Tendeur pour un courroie de transmission

(30) Priorität: 15.11.2002 DE 10253241
(43) Veröffentlichungstag der Anmeldung: 19.05.2004
(73) Patentinhaber: Schaeffler Technologies AG & Co. KG, 91074 Herzogenaurach (DE)
(72) Erfinder: Petri, Werner, 91058 Erlangen (DE); Bogner, Michael, 90542 Eckental (DE)

(56) Entgegenhaltungen:
- WO-A2-02/29279
- CH-A- 351 470
- DE-A1- 3 933 878
- DE-A1- 4 427 509
- DE-U1- 29 723 441
- FR-A- 2 781 008
- FR-A1- 2 832 358
- GB-A- 1 162 030

## Beschreibung

Spannvorrichtung für einen Zugmitteltrieb an einer Maschine, insbesondere Brennkraftmaschine, der als Riemen-, Kettentrieb oder dergleichen, mit je einer Spannrolle im Zug- und im Leertrum, die an schwenkbaren Hebeln gelagert sind, wobei die Drehachsen der Hebel an der Maschine festgelegt sind und die Hebel zur Erzeugung gegensinniger Schwenkbewegungen formschlüssig miteinander in Wirkverbindung stehen, und mit einem mit beiden Hebeln verbundenen Spannelement, das einerseits mit beiden Hebeln in Wirkverbindung steht und andererseits an der Maschine angelenkt ist.

### Hintergrund der Erfindung

Bei der aus der DE 44 27 509 A1 bekannten Spannvorrichtung wird die formschlüssige Verbindung der Hebel durch Verzahnungen an Segmenten der Hebel dargestellt, die ineinander greifen. Das Spannelement ist dabei zwischen den Hebeln angeordnet. Damit eine hinreichende Vorspannung des Zugmitteltriebes in beiden Drehrichtungen erfolgt, ist eine auf beide Verzahnungen einwirkende gemeinsame Freilaufeinrichtung vorgesehen, die sicherstellt, dass der Zugmitteltrieb nur dann nachgestellt wird, wenn er sich in Ruhestellung befindet.

Es handelt sich insgesamt also um eine Spannvorrichtung, die aufwendig ausgebildet ist und darüber hinaus nur als Ruhe-Vorspann-Einrichtung ausgeführt ist, die während des Betriebes starr gestellt wird und nur im Ruhezustand den Zugmitteltrieb nachspannt. Dadurch können die während des Betriebs des Zugmitteltriebes auftretenden Schwingungen und Veränderungen des Zugmitteltriebes nicht berücksichtigt und nicht zu einem Ausgleich der Spannkräfte zwischen den Hebeln eingesetzt werden.

Eine Spannvorrichtung der eingangs genannten Art ist aus der WO 02/29279 A2 bekannt.

### Aufgabe der Erfindung

Aufgabe der Erfindung ist es, eine Spannvorrichtung für einen Zugmitteltrieb dahingehend zu verbessern, dass sie einfach in der Herstellung und so ausgebildet ist, dass sie auch während des Betriebs nachgestellt werden kann und eine Rückwirkung der Spannrolle des Zug- oder Leertrums auf die andere Spannrolle im jeweiligen Gegentrum erlaubt.

### Zusammenfassung der Erfindung

Die Aufgabe der Erfindung wird dadurch gelöst, dass an den Hebeln oder an mit den Hebeln verbundenen Armen Drehpunkte vorgesehen sind, an denen Lenker angreifen, die mit dem freien Ende des Spannelements schwenkbar verbunden sind.

Dadurch erhält das Spannelement eine übergeordnete Funktion, da es beide Hebel gegensinnig spannt und andererseits es zulässt, dass die Hebel aneinander abgestützt sind und sich gegenseitig beeinflussen können. Die Lenker sind dabei vorzugsweise als starre Streben ausgebildet, so dass die Hebel über die Streben miteinander und mit dem Spannelement verbunden sind. Es ist aber auch möglich, die Streben in ihrer Längsrichtung elastisch nachgiebig auszubilden, so dass die Verbindung der Hebel untereinander und zu dem Spannelement nicht unmittelbar sondern über die Veränderung der Krafteinwirkung erfolgt.

Die erfindungsgemäße Spannvorrichtung ist bevorzugt für Zugmitteltriebe einsetzbar, die den Antrieb eines Startergenerators einschließen. Der eine Doppelfunktion ausübende Startergenerator bewirkt abhängig vom Betriebsmodus, dem Start oder dem Normalbetrieb der Brennkraftmaschine eine Drehmomentumkehr in dem Riementrum zwischen den Riemenscheiben der Kurbelwelle und des Startergenerators. Die zwei unabhängig voneinander schwenkbaren Spannrollen der Spannvorrichtung ermöglichen folglich für jeden Betriebsmodus eine ausreichende Vorspannung des Riementrums.

Das Spannelement seinerseits kann entweder starr derart an der Maschine befestigt sein, dass der mit den Lenkern verbundene gemeinsame Anlenkpunkt nur in Längsrichtung des Spannelements verlagerbar ist.

Das Spannelement kann aber auch an seinem dem gemeinsamen Anlenkpunkt entgegengesetzten Ende schwenkbar an der Maschine befestigt sein. Dadurch ergibt sich eine sternförmige Abstützung, bei der der gemeinsame Anlenkpunkt quer zum Spannelement beweglich ist.

Dadurch, dass die Hebel an dem Spannelement angelenkt sind, wird ein Kniehebelmechanismus gebildet, wobei eine Verlängerung oder Verkürzung des Spannelements zu der gegensinnigen Drehbewegung der Hebel führt. Je nach Anlenkung der Lenker an den Hebeln kann das Spannelement als federbelastetes Druck- oder Zugelement ausgebildet sein.

Wird der Abstand jedes Drehpunktes zu der Schwenkachse des zugeordneten Hebels gleich gewählt, so stellt sich an den Hebeln um jede Schwenkachse ein gleiches Moment ein. Dazu dient auch die Maßnahme, dass die wirksame Länge der Lenker gleich ist.

In vorteilhafter Weise ist das Spannelement als hydraulisch wirkendes Spannsystem, insbesondere Hydraulikelement, ausgebildet. Diese Hydraulikelemente sind an sich bekannt und weisen eine definierte Federkraft sowie eine definierte Dämpfung auf.

Eine besonders raumsparende Ausgestaltung ergibt sich dann, wenn die Hebel koaxial zueinander auf einer Achse gelagert sind, wobei diese Achse auch eine Umlenkrolle des Zugmitteltriebes tragen kann.

Es ist möglich, zusätzlich zu der Dämpfung im Hydraulikelement oder anstelle dessen, Reibelemente an den Hebeln im Bereich ihrer Lagerung vorzusehen, die mit an der Maschine drehfest angeordneten Reibelementen bzw. mit Reibelementen an dem jeweiligen anderen Hebel in Verbindung stehen.

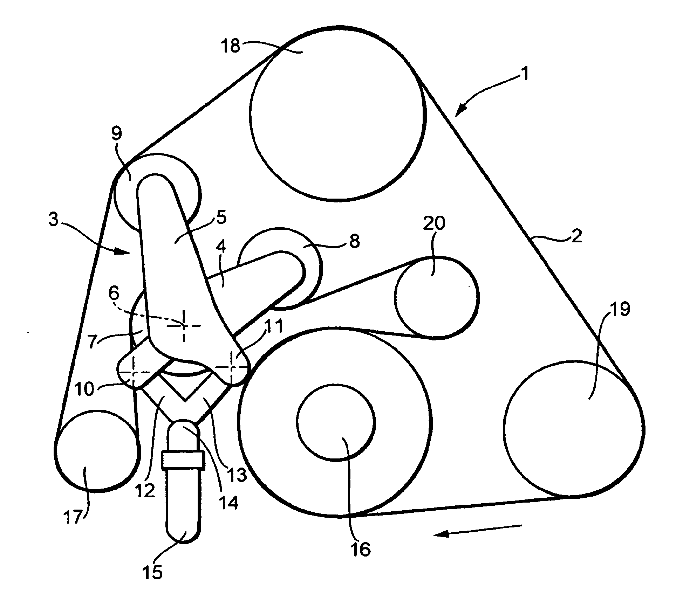

### Kurze Beschreibung der Zeichnung

Zur weiteren Erläuterung der Erfindung wird auf die Zeichnung verwiesen, in der ein Ausführungsbeispiel der Erfindung vereinfacht dargestellt ist.

Die Figur zeigt eine Seitenansicht eines Zugmitteltriebes in schematischer Darstellung mit einer erfindungsgemäßen Spannvorrichtung.

### Detaillierte Beschreibung der Zeichnung

In der Figur ist mit 1 ein Zugmitteltrieb bezeichnet, der einen Riemen 2 aufweist, der über mehrere, An- und Abtriebsscheiben und Umlenkrollen geführt ist. Der Zugmitteltrieb 1 ist zum Antrieb von verschiedenen Aggregaten bestimmt . Der Abtrieb erfolgt von der Kurbelwelle 16 bzw. deren zugehörige Riemenscheibe, die von dem Riemen 2 teilweise umschlungen ist. Der Riemen 2 verbindet die Riemenscheiben der Aggregate, wie Startergenerator 17, Klimakompressor 18 und Wasserpumpe 19. Weiterhin ist dem Zugmittel 1 eine Umlenkrolle 20 zugeordnet. Die erfindungsgemäße Spannvorrichtung 3 sorgt für eine ausreichende Vorspannung des Riemens 3 unabhängig vom Betriebsmodus des Steuergenerators 17. In dem Startmodus übernimmt der Startergenerator 17 die Funktion des Starters, wobei dieses Aggregat einen Drehimpuls des Zugmitteltriebs im Uhrzeigersinn auslöst. Dabei wird der Riementrum zwischen dem Startergenerator 17 und der Kurbelwelle 16 zum Zugtrum, wobei dieses Zugtrum mittels der Spannrolle 8 vorgespannt wird. Nach Start der Brennkraftmaschine erfolgt der Antrieb des Zugmitteltriebs 1 von der Kurbelwelle 16, wobei sich die Drehrichtung des Zugmitteltriebs 1 nicht verändert. Im Normalbetrieb der Brennkraftmaschine kommt es zu einer Umkehr der Drehmomentrichtung, d.h. der Riementrum zwischen der Kurbelwelle 16 und dem Startergenerator 17 wird zum Leertrum. Entsprechend stützt sich die Spannrolle 8 an dem Leertrum und die Spannrolle 9 an dem Zugtrum ab.

Eine mit 3 bezeichnete Spannvorrichtung weist je einen Hebel 4 und 5 auf, die koaxial zueinander auf einer Achse 6 gelagert sind. Neben den Hebeln 4 und 5, d. h. in der Figur hinter den Hebeln 4 und 5, ist auf der Achse 6 eine Umlenkrolle 7 drehbar gelagert. An den freien Enden der Hebel sind Spannrollen 8 und 9 drehbar gelagert, die mit dem Riemen 2 in Wirkverbindung stehen. Die Hebel 4 und 5 weisen weiterhin Arme 10 und 11 auf, die in Bezug auf die Achse 6 im wesentlichen auf der den Hebeln 4 und 5 entgegengesetzten Enden angeordnet sind. An den Armen 10 und 11 greifen gelenkig gelagert je ein Lenker 12 und 13 an, die mit ihren anderen Enden zusammen an einem freien Ende 14 eines Spannelements 15 angelenkt sind. Das Spannelement 15 ist, nicht näher dargestellt, an einem Gehäuse einer Brennkraftmaschine starr befestigt, so dass das freie Ende 14 in Längsrichtung des Spannelementes 15 beweglich angeordnet ist. Das freie Ende 14 ist am Spannelement so geführt, dass keine Schwenkbewegung möglich ist. Es sei aber ausdrücklich darauf hingewiesen, dass das Spannelement 15 an seinem dem freien Ende 14 entgegengesetzten Ende schwenkbar am Gehäuse der Brennkraftmaschine angelenkt sein kann, sodass das freie Ende 14 entsprechend beweglich ist.

Das Spannelement 15 weist unter anderem eine nicht dargestellte Druckfeder auf, die auf das freie Ende 14 eine Kraft in Richtung der Achse 6 ausübt, wobei diese Kraft auf die Lenker 12 und 13 und die Arme 10 und 11 umgelenkt wird, so dass auf die Hebel 4 und 5 ein entgegengesetztes Moment initiiert wird, wobei die Spannrollen 8 und 9 gegen den Riemen im Sinne eines Spannens desselben gedrückt werden. Durch diese besondere Ausgestaltung und Anordnung des Spannelements 15, der Lenker 12 und 13 und der Arme 10 und 11 entsteht ein Kniegelenkmechanismus, der die auf eine Spannrolle und einen Hebel ausgeübte Kraft auf den anderen Hebel und die andere Spannrolle überträgt. Dies geschieht insbesondere dann, wenn das Spannelement 15 schwenkbar gelagert ist.

### Bezugszeichenliste

- 1: Zugmitteltrieb
- 2: Riemen
- 3: Spannvorrichtung
- 4: Hebel
- 5: Hebel
- 6: Achse
- 7: Umlenkrolle
- 8: Spannrolle
- 9: Spannrolle
- 10: Arm
- 11: Arm
- 12: Lenker
- 13: Lenker
- 14: freies Ende
- 15: Spannelement
- 16: Kurbelwelle
- 17: Startergenerator
- 18: Klimakompressor
- 19: Wasserpumpe
- 20: Umlenkrolle

## Patentansprüche

1. Spannvorrichtung für einen Zugmitteltrieb (1) an einer Maschine, insbesondere Brennkraftmaschine, der als Riemen- (2), Kettentrieb oder dergleichen, mit je einer Spannrolle (8 und 9) im Zug- und im Leertrum, die an schwenkbaren Hebeln (4 und 5) gelagert sind, wobei die Drehachsen (6) der Hebel an der Maschine festgelegt sind und die Hebel (4 und 5) zur Erzeugung gegensinniger Schwenkbewegungen miteinander in Wirkverbindung stehen, und mit einem mit beiden Hebeln (4 und 5) verbundenen Spannelement (15), das einerseits mit beiden Hebeln (4 und 5) in Wirkverbindung steht und andererseits an der Maschine angelenkt ist, **dadurch gekennzeichnet, dass** an den Hebeln (4 und 5) oder an mit den Hebeln verbundenen Armen (10 und 11) Drehpunkte vorgesehen sind, an denen Lenker (12 und 13) angreifen, die mit dem freien Ende (14) des Spannelements (15) schwenkbar verbunden sind.

2. Spannvorrichtung nach Anspruch 1, **dadurch gekennzeichnet, dass** die Anlenkung der Hebel (4 und 5) an dem Spannelement (15) als Kniehebelmechanismus derart ausgebildet ist, dass eine Verlängerung oder Verkürzung des Spannelements (15) zu der gegensinnigen Schwenkbewegung der Hebel (4 und 5) führt.

3. Spannvorrichtung nach Anspruch 1 oder 2, **dadurch gekennzeichnet, dass** der Abstand jedes Drehpunktes zu der Achse (6) des zugeordneten Hebels (4 und 5) gleich ist.

4. Spannvorrichtung nach einem der Ansprüche 2 oder 3, **dadurch gekennzeichnet, dass** die Wirklängen der Lenker (12 und 13) gleich sind.

5. Spannvorrichtung nach einem der vorhergehenden Ansprüche, **dadurch gekennzeichnet, dass** das Spannelement (15) als hydraulisch wirkendes Spannsystem, insbesondere Hydraulikelement, ausgebildet ist.

6. Spannvorrichtung nach einem der vorhergehenden Ansprüche, **dadurch gekennzeichnet, dass** die Hebel (4 und 5) koaxial zueinander auf einer Achse (6) gelagert sind.

7. Spannvorrichtung nach einem der vorhergehenden Ansprüche, **dadurch gekennzeichnet, dass** die Hebel (4 und 5) Reibelemente aufweisen, die mit an der Maschine und/oder dem anderen Hebel (4 oder 5) drehfest angeordneten Reibelementen in Wirkverbindung stehen.

8. Spannvorrichtung nach einem der vorhergehenden Ansprüche, **dadurch gekennzeichnet, dass** koaxial zu der gemeinsamen Lagerung (6) der Hebel (4 und 5) oder einer der Lagerungen eines der Hebel eine Umlenkrolle (7) drehbar angeordnet ist.

## Claims

1. Tensioning apparatus for a traction mechanism drive (1) on a machine, in particular an internal combustion engine, which traction mechanism drive (1) is configured as a belt drive (2), chain drive or the like, having in each case one tensioning roller (8 and 9) in the pulling run and in the empty run which are mounted on pivotable levers (4 and 5), the rotational pins (6) of the levers being fixed on the machine and the levers (4 and 5) being operatively connected to one another in order to produce pivoting movements in opposite directions, and having a tensioning element (15) which is connected to both levers (4 and 5), is operatively connected at one end with both levers (4 and 5) and is articulated on the machine at the other end, **characterized in that** pivot points are provided on the levers (4 and 5) or on arms (10 and 11) which are connected to the levers, at which pivot points links (12 and 13) act which are connected pivotably to the free end (14) of the tensioning element (15).

2. Tensioning apparatus according to Claim 1, **characterized in that** the articulation of the levers (4 and 5) on the tensioning element (15) is configured as a toggle lever mechanism in such a way that an extension or shortening of the tensioning element (15) leads to the pivoting movement of the levers (4 and 5) in the opposite direction.

3. Tensioning apparatus according to Claim 1 or 2, **characterized in that** the spacing of each pivot point from the pin (6) of the associated lever (4 and 5) is identical.

4. Tensioning apparatus according to either of Claims 2 and 3, **characterized in that** the effective lengths of the links (12 and 13) are identical.

5. Tensioning apparatus according to one of the preceding claims, **characterized in that** the tensioning element (15) is configured as a hydraulically active tensioning system, in particular a hydraulic element.

6. Tensioning apparatus according to one of the preceding claims, **characterized in that** the levers (4 and 5) are mounted coaxially with respect to one another on a pin (6).

7. Tensioning apparatus according to one of the preceding claims, **characterized in that** the levers (4 and 5) have friction elements which are operatively connected to friction elements which are arranged in a rotationally fixed manner on the machine and/or the other lever (4 or 5).

8. Tensioning apparatus according to one of the preceding claims, **characterized in that** a deflection roller (7) is rotatably arranged coaxially with respect to the common mounting (6) of the levers (4 and 5) or one of the mountings of one of the levers.

## Revendications

1. Dispositif tendeur pour un entraînement à moyen de traction (1) sur une machine, en particulier un moteur à combustion interne, qui est réalisé sous forme d'entraînement à courroie (2), d'entraînement à chaîne ou similaire, comprenant à chaque fois un galet-tendeur (8 et 9) dans le tronçon de traction et dans le tronçon à vide, lesquels galets-tendeurs sont montés sur des leviers pivotants (4 et 5), les axes de rotation (6) des leviers étant fixes sur la machine et les leviers (4 et 5) étant en liaison fonctionnelle l'un avec l'autre pour produire des mouvements de pivotement en sens inverses, et comprenant un élément tendeur (15) connecté aux deux leviers (4 et 5), qui est d'une part en liaison fonctionnelle avec les deux leviers (4 et 5) et qui est articulé d'autre part à la machine, **caractérisé en ce que** des centres de rotation sont prévus sur les leviers (4 et 5) ou sur des bras (10 et 11) connectés aux leviers, au niveau desquels centres de rotation viennent en prise des bras oscillants (12 et 13) qui sont connectés de manière pivotante à l'extrémité libre (14) de l'élément tendeur (15).

2. Dispositif tendeur selon la revendication 1, **caractérisé en ce que** l'articulation des leviers (4 et 5) à l'élément tendeur (15) est réalisée sous forme de mécanisme à genouillère de telle sorte qu'un prolongement ou un raccourcissement de l'élément tendeur (15) conduise au mouvement de pivotement en sens inverse des leviers (4 et 5).

3. Dispositif tendeur selon la revendication 1 ou 2, **caractérisé en ce que** la distance de chaque centre de rotation à l'axe (6) du levier associé (4 et 5) est égale.

4. Dispositif tendeur selon l'une quelconque des revendications 2 ou 3, **caractérisé en ce que** les longueurs efficaces des bras oscillants (12 et 13) sont identiques.

5. Dispositif tendeur selon l'une quelconque des revendications précédentes, **caractérisé en ce que** l'élément tendeur (15) est réalisé sous forme de système tendeur à action hydraulique, notamment sous forme d'élément hydraulique.

6. Dispositif tendeur selon l'une quelconque des revendications précédentes, **caractérisé en ce que** les leviers (4 et 5) sont supportés coaxialement l'un par rapport à l'autre sur un axe (6).

7. Dispositif tendeur selon l'une quelconque des revendications précédentes, **caractérisé en ce que** les leviers (4 et 5) présentent des éléments de friction qui sont en liaison fonctionnelle avec des éléments de friction disposés de manière solidaire en rotation sur la machine et/ou sur l'autre levier (4 ou 5).

8. Dispositif tendeur selon l'une quelconque des revendications précédentes, **caractérisé en ce qu'**une poulie de renvoi (7) est disposée de manière rotative coaxialement au support sur palier commun (6) des leviers (4 et 5) ou à l'un des supports sur paliers de l'un des leviers.
